# EUROPÄISCHE PATENTSCHRIFT

(11) **EP 1 064 759 B1**
(45) Veröffentlichungstag und Bekanntmachung des Hinweises auf die Patenterteilung: **03.07.2002**
(21) Anmeldenummer: 99907625.0
(22) Anmeldetag: 11.03.1999
(51) Int. Cl.: H04L 12/40, H04L 12/26

(54) **VERFAHREN ZUM INBETRIEBNEHMEN EINES BUSSYSTEMS SOWIE ENTSPRECHENDES BUSSYSTEM**
METHOD FOR COMMISSIONING A BUS SYSTEM AND CORRESPONDING BUS SYSTEM
PROCEDE DE MISE EN SERVICE D'UN SYSTEME BUS ET SYSTEME BUS EN QUESTION

(30) Priorität: 18.03.1998 DE 19811894
(43) Veröffentlichungstag der Anmeldung: 03.01.2001
(73) Patentinhaber: Luxmate Controls GmbH, 6850 Dornbirn (AT)
(72) Erfinder: HEIM, Armin, A-6900 Bregenz (AT); GEIGINGER, Joachim, A-6845 Hohenems (AT)
(74) Vertreter: Schmidt-Evers, Jürgen, Dipl.-Ing.
(86) Internationale Anmeldenummer: EP9901598
(87) Internationale Veröffentlichungsnummer: WO9948251

(56) Entgegenhaltungen:
- EP-A- 0 772 320
- US-A- 4 463 352
- US-A- 4 729 124
- US-A- 5 583 448
- COHEN L: "TESTING THE SUBSCRIBER INTERFACE TO THE ARINC 629 CURRENT MODE BUS" PROCEEDINGS OF THE SYSTEMS READINESS TECHNOLOGY CONFERENCE (AUTOTESTCON), ANAHEIM, SEPT. 20 - 22, 1994, Nr. CONF. 30, 20. September 1994, Seiten 653-661, XP000554161 INSTITUTE OF ELECTRICAL AND ELECTRONICS ENGINEERS

## Beschreibung

Die vorliegende Erfindung betrifft ein Verfahren zum Inbetriebnehmen eines Bussystems nach dem Oberbegriff des Anspruches 1 sowie ein entsprechendes Bussystem, bei dem über mindestens eine Spannungsversorgungsleitung einerseits eine Versorgungsspannung an daran anschließbare Verbraucher angelegt wird und andererseits Informationen, beispielsweise Steuerinformationen, übertragen werden.

Bussysteme, bei denen die zu den einzelnen Komponenten bzw. Verbrauchern führenden Netzleitungen als Busleitung verwendet werden, sind seit längerer Zeit bekannt.

Aus der PCT/EP 97/06577 ist beispielsweise ein entsprechendes Bussystem zum Einsatz für Anlagen der Gebäudeleittechnik bekannt, wobei an das Bussystem verschiedene Verbraucher (Aktoren), wie z. B. Leuchten, Jalousien, Klimaanlagen oder dergleichen, angeschlossen werden. Über die für diese Verbraucher vorgesehenen Netzleitungen werden zudem Informationen übertragen, um die einzelnen Verbraucher mit Hilfe dieser Informationen ansteuern oder entsprechende Rückmeldeinformationen übertragen zu können. Die auf diese Weise über die Netzleitungen übertragenen Informationen werden in der Regel mit einer um Größenordnungen höheren Frequenz als die eigentliche Netzfrequenz des Bussystems übertragen, wobei insbesondere das zur Informationsübertragung verwendete Nutzband oberhalb von 100 kHz liegt. Die Verbraucher können die einzelnen Informationssignale über entsprechend ausgestaltete Filterschaltungen aus dem niederfrequenten Versorgungsspannungssignal auskoppeln.

In der Regel erfolgt die Informationsübertragung über die Netzleitungen lediglich innerhalb eines Teilnetzes, welches über eine Bandsperrefilteranordnung sowie eine Verteilereinrichtung (Netzkoppler) an die zentrale Versorgungsspannungsleitung angeschlossen ist. Durch den Einsatz von Bandsperrefiltern können die einzelnen Teilnetze gegenüber dem übrigen Netz abgetrennt werden. Diesbezüglich wurde in der PCT/EP97/06577 als verbesserte Maßnahme vorgeschlagen, für jede einem Teilnetz entsprechende Zweigleitung ein separates Bandsperrefilter vorzusehen, welches zwischen die Verteilereinrichtung (Netzkoppler) und die entsprechende Zweigleitung geschaltet wird. Diese Anordnung weist gegenüber einer Anordnung, bei der ein zentrales Bandsperrefilter zwischen die zentrale Versorgungsspannungsleitung und die Verteilereinrichtung geschaltet wird, den Vorteil auf, daß die einzelnen Bandsperrefilter weniger komplex als ein einziges zentrales Bandsperrefilter aufgebaut sein können und zudem die Informationssignale nicht auf die zentrale Netzspannung-Sammelschiene des Verteilers gelangen können, was ansonsten zu einer starken Dämpfung der Informationssignale führen könnte. Zudem werden Störungen innerhalb einer Zweigleitung nicht unmittelbar auf die anderen Zweigleitungen bzw. Teilnetze übertragen.

Neben unterschiedlichen Verbrauchern können an die einzelnen Zweigleitungen bzw. Versorgungsspannungsleitungen auch beliebige Sensoren, Schnittstellen oder Steuergeräte angeschlossen sein, so daß mit Hilfe der zuvor erwähnten Informationsübertragung über die entsprechende Versorgungsspannungsleitung eine Kommunikation zwischen den einzelnen Komponenten des Bussystems möglich ist.

Des weiteren ist aus der PCT/EP90/01133 ein Steuersystem für mehrere verteilt angeordnete Verbraucher bekannt, die von einem zentralen Befehlsgeber bzw. Steuergerät aus angesteuert werden können, so daß auf diese Weise unterschiedliche Verbraucherarten dezentral eingestellt werden können. Jeder Verbraucher speichert eine Ursprungsadresse, die vor der eigentlichen Inbetriebnahme des Steuersystems vom jeweiligen Verbraucher an den Befehlsgeber übertragen wird. Anschließend fragt der Befehlsgeber durch Adressierung der einzelnen Ursprungsadressen die entsprechenden Verbraucher ab, um auf diese Weise Informationen über die räumliche Anordnung und den Typ des jeweiligen Verbrauchers zu gewinnen. Des weiteren werden die einzelnen Verbraucher bestimmten Gruppen oder Anordnungen von Verbrauchern zugeordnet, wobei anschließend der Befehlsgeber eine der jeweiligen Gruppenzuordnung entsprechende Betriebsadresse in den einzelnen Verbrauchern speichert. Auf die$e Weise können zentral gruppenweise zusammengeschlossene Verbraucher oder Verbraucher einer bestimmten Verbraucherart von dem Befehlsgeber aus eingestellt werden, wobei zudem durch die Adressenverwaltung eine größtmögliche Flexibilität des Steuersystems gewährleistet ist. Das in der PCT/EP90/01133 beschriebene Steuersystem bezieht sich jedoch nicht explizit auf die eingangs beschriebenen Bussysteme, bei denen über Netzleitungen zusammen mit dem niederfrequenten Versorgungsspannungssignal gleichzeitig höherfrequente Informationssignale übertragen werden.

Ein besonderes Problem der zuvor beschriebenen Bussysteme stellt die Übertragungssicherheit, d. h. die Gewährleistung einer ausreichenden Qualität der Informationssignalübertragung, dar. Dabei können sowohl auf dem Vorwärtskanal, d. h. von dem Netzkoppler bzw. Verteiler zu den einzelnen Verbrauchern, als auch auf dem Rückwärtskanal, d. h. von den einzelnen Verbrauchern zu dem Verteiler, Störungen auftreten, die dazu führen, daß die Informationssignale, wie z. B. Steuersignale oder Rückmeldungen, nicht mit ausreichender Qualität übertragen oder sogar nicht mehr empfangen werden können, so daß gegebenenfalls kein ordnungsgemäßer Betrieb des Bussystems möglich ist.

Ein ordnungsgemäßer Betrieb ist beispielsweise bei Bussystemen, die in Flugzeugen zum Einsatz, kommen, unerläßlich. Aus diesem Grund enthält z.B. der in Flugzeugen vom Typ Boeing 777 verwendete ARINC 629 Bus mehrere Sicherheitssysteme, durch welche der Ausfall eines Systemelements automatisch erkannt und durch den Einsatz eines identischen Ersatzelements aufgefangen wird. Es ist dann allerdings von außen betrachtet nicht ohne weiteres ersichtlich, ob ein Busteilnehmer oder das zum Anschließen der Busteilnehmer an die Busleitungen verwendete Abzweigkabel teilweise defekt sind. In dem Artikel "Testing the Subscriber Interface to the ARINC 629 Current Mode Bus" der Zeitschrift Proceedings of the Systems Readiness Technology Conference (AUTOTESTCON), Anaheim, Sept. 1994, Seiten 653-661 wird daher ein Testsystem vorgestellt, durch welches gezielt das Abzweigkabel auf seine vollständige Funktionsfähigkeit hin überprüft werden kann. Hierzu wurde ein Testmodul entwickelt, welches mit dem Abzweigkabel und dem daran angeschlossenen Busteilnehmer verbunden wird und durch Übermittlung und Simulation von Bussignalen sowie durch Auswertung der in dem Abzweigkabel auftretenden Signale einen vollständigen Funktionstest einschließlich der Beobachtung, ob die Ersatzelemente ordnungsgemäß funktionieren, durchführt.

Das in diesem Artikel beschriebene Testsystem, untersucht zwar die einzelnen Abzweigkabel äußerst genau, ist allerdings nicht in der Lage, das Bussystem insgesamt auf seine Funktionsfähigkeit hin zu überprüfen. Beispielsweise kann nicht erkannt werden ob die Busleitungen ordnungsgemäß funktionieren und die Teilnehmer korrekt an den Bus angeschlossen sind, da die zu testenden Einheiten direkt mit dem Testmodul verbunden werden.

Der vorliegenden Erfindung liegt daher die Aufgabe zugrunde, die Inbetriebnahme eines eingangs geschilderten Bussystems zu erleichtern sowie gleichzeitig eine ausreichende Sicherheit gegen Qualitätsverluste oder Störungen zu gewährleisten, indem mittels einem einfach durchzuführenden Test die Funktionsfähigkeit des Bussystems in seiner Gesamtheit überprüft wird.

Die Aufgabe wird gemäß der vorliegenden Erfindung durch ein Inbetriebnahmeverfahren mit den Merkmalen des Anspruches 1 gelöst.

Gemäß der vorliegenden Erfindung wird zum Inbetriebnehmen nach der Installation und vor dem eigentlichen Betrieb des Bussystems ein Funktionstest durchgeführt, wobei dieser Test mehrere nacheinander ausgeführte Testphasen umfaßt, die unterschiedliche Aspekte der Funktionsfähigkeit des Bussystems testen. Insbesondere wird dabei während einer ersten Testphase der Anschluß von Verbrauchern, Sensoren und/oder Steuereinrichtungen an die jeweils richtige Spannungsversorgung getestet. Für den Fall, daß an die zentrale Spannungsversorgungsleitung über den zuvor beschriebenen Verteiler bzw. Netzkoppler mehrere Teilnetze bzw. Zweigleitungen angeschlossen sind, über die zusammen mit dem niederfrequenten Versorgungsspannungssignal eine Informationssignalübertragung erfolgen soll, ist vorteilhafterweise vorgesehen, die einzelnen Teilnetze separat bzw. einzeln zu prüfen, so daß während des Tests einer Zweigleitung die anderen Zweigleitungen stromlos sind.

Gemäß einem bevorzugten Ausführungsbeispiel umfaßt der Test drei Testphasen. So kann die erste Testphase neben einem korrekten Anschluß der Verbraucher, Sensoren oder Steuergeräte zusätzlich überprüfen, ob die gegebenenfalls standardmäßig implementierten Sicherheitsfunktionen der Verbraucher richtig reagieren. Mit Hilfe einer zweiten Testphase kann die Sendefähigkeit des Netzkopplers bzw. Verteilers sowie die Empfangsfähigkeit der einzelnen Verbraucher, Sensoren oder Steuergeräte getestet werden. Nach Durchlaufen dieser zweiten Testphase steht somit fest, ob alle Verbraucher die von dem Netzkoppler gesendeten Nachrichten korrekt verstehen können. Mit der dritten Testphase kann schließlich die Informationsübertragung über den Rückwärtskanal des Bussystems, d. h. von den Verbrauchern bzw. Aktoren zu dem Netzkoppler, getestet werden, indem die Qualität der von den Verbrauchern abgesetzten Rückmeldungen bzw. Zustandsinformationen ausgewertet wird.

Der bei dem Bussystem gemäß der vorliegenden Erfindung eingesetzte Netzkoppler dient in erster Linie als Schnittstelle zwischen einer zentralen Versorgungsspannung und den einzelnen Teilnetzen bzw. Zweigleitungen, über die eine Informationsübertragung zusammen mit der Versorgungsspannung stattfinden soll. Der Verteiler kann jedoch auch eine eigene Funktionalität, wie beispielsweise die Inbetriebsnahmefunktion, besitzen. Ebenso ist jedoch auch denkbar, daß die Inbetriebnahme- bzw. Testfunktion von einer Steuereinrichtung ausgeführt wird, die an eine der Busleitungen angeschlossen ist und über den Verteiler mit den einzelnen Teilnetzen, welche zur Informationsübertragung vorgesehen sind, kommuniziert.

Die Erfindung wird nachfolgend anhand eines bevorzugten Ausführungsbeispiels näher beschrieben.
Figur 1 zeigt beispielhaft den Aufbau eines bevorzugten Ausführungsbeispiels eines Bussystems gemäß der vorliegenden Erfindung,
Figur 2 zeigt eine Darstellung zur Erläuterung des grundsätzlichen Ablaufs eines bevorzugten Verfahrens gemäß der vorliegenden Erfindung zum Inbetriebnehmen des in Figur 1 gezeigten Systems, und
Figur 3a und 3b zeigen Darstellungen in Form eines Flußdiagramms zur genaueren Erläuterung des in Figur 2 gezeigten Verfahrens der vorliegenden Erfindung.

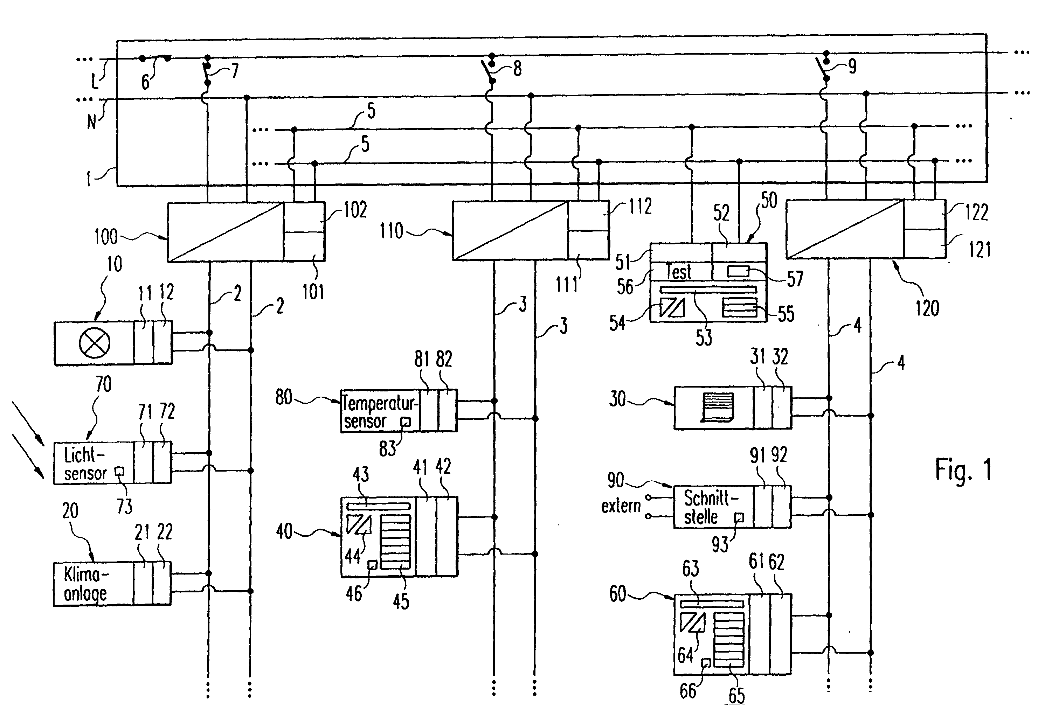

Figur 1 zeigt eine zentrale Spannungsversorgungsleitung bzw. Netzleitung mit einem stromführenden Leiter L und einem Nulleiter N. An diese zentrale Netzleitung ist ein Verteiler bzw. Netzkoppler 1 angeschlossen, der von der zentralen Netzleitung mehrere weitere Spannungsversorgungsleitungen 2-4 abzweigt, die Teilnetze oder Stromkreise für das Bussystem bilden und zur Spannungsversorgung von an diesen Spannungsversorgungsleitungen 2-4 angeschlossenen Verbrauchern 10, 20 und 30 sowie zur Übertragung von Informationen dienen.

Die Informationsübertragung über die einzelnen Spannungsversorgungsleitungen 2-4 erfolgt in einem Frequenzband, welches um mehrere Größenordnungen höher als die niedrige Wechselspannungsfrequenz der an der zentralen Netzspannungsleitung L, N anliegenden Netzspannung ist. Die zur Informationsübertragung dienenden Teilnetze, welche insbesondere durch die abgezweigten Spannungsversorgungsleitungen 2-4 gebildet sind, sind gegenüber der zentralen Netzleitung L, N durch Bandsperrefilter 100, 110 und 120 abgetrennt. Gemäß der in Figur 1 gezeigten Ausgestaltung sind die Bandsperrefilter 100, 110 und 120 zwischen den zur Informationsübertragung dienenden Spannungsversorgungsleitungen 2-4 und dem Verteiler 1 angeordnet und stellen Sperren für die zur Informationsübertragung verwendeten Frequenzbereiche dar. Um jedoch auch die Übertragung der Informationen zwischen den einzelnen Spannungsversorgungsleitungen 2-4 zu ermöglichen, sind gemäß Figur 1 die einzelnen Bandsperrefilter 100, 110 und 120 über eine zweiphasige Busleitung 5 verbunden und weisen jeweils eine Codier- und Decodiereinheit 101, 111 bzw. 121 zum Codieren und Decodieren der zu übertragenden Informationen sowie eine Sende- und Empfangseinheit 102, 112 bzw. 122 zum Senden und Empfangen der übertragenen Informationen auf. Somit können Informationen nicht nur auf den einzelnen Spannungsversorgungsleitungen 2, 3 bzw. 4 sondern auch zwischen den einzelnen Spannungsversorgungsleitungen 2, 3 bzw. 4 übertragen werden.

Das in Figur 1 gezeigte Bus- bzw. Gebäudeleittechniksystem umfaßt eine Vielzahl von unterschiedlichen Verbrauchern, die beispielsweise in unterschiedlichen Räumen eines Gebäudes angeordnet und an die einzelnen Spannungsversorgungsleitungen 2-4 angeschlossen sein können. Insbesondere ist in Figur 1 eine Beleuchtungseinrichtung 10, eine Klimaanlage 20, die zur Temperaturregelung und Lüftung eines Raumes dient, sowie eine Abblendeinrichtung 30, beispielsweise eine Jalousie mit entsprechendem Antriebsmotor, dargestellt. Diese Verbraucher werden über die entsprechend mit den Verbrauchern verbundenen Spannungsversorgungsleitungen mit der Netzspannung versorgt. Zudem dienen die mit den Verbrauchern verbundenen Spannungsversorgungsleitungen zur Übertragung von Informationen zwischen dem Verteiler 1 und den Verbrauchern bzw. zwischen dem Verteiler 1, den Verbrauchern und zudem an die Spannungsversorgungsleitungen 2-4 angeschlossenen Sensoren 70, 80 und Steuergeräten 40, 50 und 60. Da jeder Verbraucher 10, 20 bzw. 30 Informationen sowohl senden als auch empfangen können soll, weist jeder Verbraucher vorteilhafterweise eine Codier- und Decodiereinheit 11, 21 bzw. 31 zum Codieren und Decodieren der zu übertragenden Informationen sowie eine Sende- und Empfangseinheit 12, 22 bzw. 32 zum Senden und Empfangen der zu übertragenden Informationen auf.

Jedes angeschlossene Steuergerät 40, 50 und 60 dient allgemein zur Steuerung der Informationsübertragung über das Bussystem und weist daher ebenfalls eine Codierund Decodiereinheit 41, 51 bzw. 61 zum Codieren und Decodieren der zu übertragenden Informationen sowie eine Sende- und Empfangseinheit 42, 52 bzw. 62 zum Senden und Empfangen der zu übertragenden Informationen auf. Über die Steuergeräte 40, 50 und 60 kann eine Bedienperson manuell in die Informationsübertragung eingreifen, indem über bestimmte Auswahltasten 45, 55 bzw. 65 der Steuergeräte ein bestimmter Verbraucher bzw. eine bestimmte Verbraucherart ausgewählt und über Einstelltasten 44, 54 bzw. 64 ein bestimmter Betriebsparameter der ausgewählten Verbraucherart bzw. des ausgewählten Verbrauchers, wie beispielsweise die Raumhelligkeit oder Raumtemperatur, verändert wird. Die einzelnen Verbraucher werden dabei mit Hilfe von Adressen angesprochen, wobei jedem Verbraucher eine individuelle Adresse zugeordnet ist. Die von dem entsprechenden Steuergerät über das zur Informationsübertragung dienende Teilnetz übertragenden Informationen werden von dem adressierten Verbraucher bzw. allen adressierten Verbrauchern empfangen, decodiert und in entsprechende Steuersignale umgesetzt, so daß automatisch beispielsweise die Helligkeit der Beleuchtungseinrichtung 10 geregelt wird. Umgekehrt wird der Betriebszustand bzw. die Betriebsparameter der einzelnen Verbraucher von den Sendeeinheiten 12, 22 und 32 der Verbraucher über das Gebäudeleittechniksystem übertragen, so daß jedes Steuergerät 40, 50 und 60 den Momentanzustand in Anzeigen 43, 53 bzw. 63 anzeigen kann. Ebenso ist denkbar, daß über die Auswahltasten 45, 55 bzw. 65 der Steuergeräte 40, 50 bzw. 60 vorgegebene Szenarien abgerufen und die einzelnen Verbraucher bzw. Verbraucherarten entsprechend einem ausgewählten Szenarium angesteuert und eingestellt werden können. So kann beispielsweise eine Auswahltaste derart belegt sein, daß nach ihrer Betätigung die Beleuchtungseinrichtung 10 auf den Wert "halbdunkel" gedimmt und die Raumtemperatur über die Klimaanlage 20 auf 20 °C eingestellt sowie in einem weiteren Raum die Jalousie 30 auf die Stellung "halbgeschlossen" eingestellt wird. Eine mögliche Ausführungsform der Steuergeräte 40, 50 und 60 ist beispielsweise in der DE-OS-94 12 900 beschrieben.

Die ebenfalls an das zur Informationsübertragung dienende Teilnetz angeschlossenen Sensoren 70 und 80 ermöglichen eine automatische Regelung der einzelnen Verbraucher, da auch diese Sensoren 70 und 80 eine Codier- und Decodiereinheit 71 bzw. 81 zum Codieren und Decodieren der zu übertragenden Informationen sowie eine Sende- und Empfangseinheit 72 bzw. 82 zum Senden und Empfangen der zu übertragenden Informationen aufweisen. In Figur 1 ist beispielsweise ein Lichtsensor 70 zur Überwachung der Raumhelligkeit sowie ein Temperatursensor 80 zur Überwachung der Innen- oder Außentemperatur dargestellt. Die von den Sensoren 70 und 80 gelieferten Istwerte werden ebenfalls über die Spannungsversorgungsleitungen 2-4 an die Steuergeräte 40, 50 und 60 übertragen, so daß diese automatisch entsprechende Steuersignale für die einzelnen Verbraucher erzeugen und übertragen können.

Zudem kann, wie in Figur 1 gezeigt ist, auch eine Schnittstelle 90 an das Gebäudeleittechniksystem angeschlossen sein, an die beispielsweise weitere Gebäudeleittechniksysteme angeschlossen werden können, oder die zum Empfang externer Steuersignale, beispielsweise von einem Computer oder einer Fernbedienung, vorgesehen sein kann. Da auch die Schnittstelle 90 Informationsdaten übertragen können muß, weist die Schnittstelle 90 ebenfalls eine Codier- und Decodiereinheit 91 sowie eine Sende- und Empfangseinheit 92 auf.

Allgemein ermöglicht das in Figur 1 gezeigte Bus- bzw. Gebäudeleittechniksystem eine Informationsübemagung zwischen dem Verteiler 1 und den einzelnen Verbrauchern 10, 20 und 30, Sensoren 70 und 80, der Schnittstelle 90 sowie den Steuergeräten 40, 50 und 60 unabhängig von der Anordnung in den einzelnen Räumen des Gebäudeleittechniksystems, wobei zur Codierung der zu übertragenden Informationen jedes bekannte Codierverfahren, insbesondere die PCM-Codierung, sowie zur Übertragung der Informationen jedes bekannte Übertragungsverfahren, insbesondere die sogenannte Spreiztechnik (SSMA, Spread Spectrum Multiple Access) angewendet werden kann.

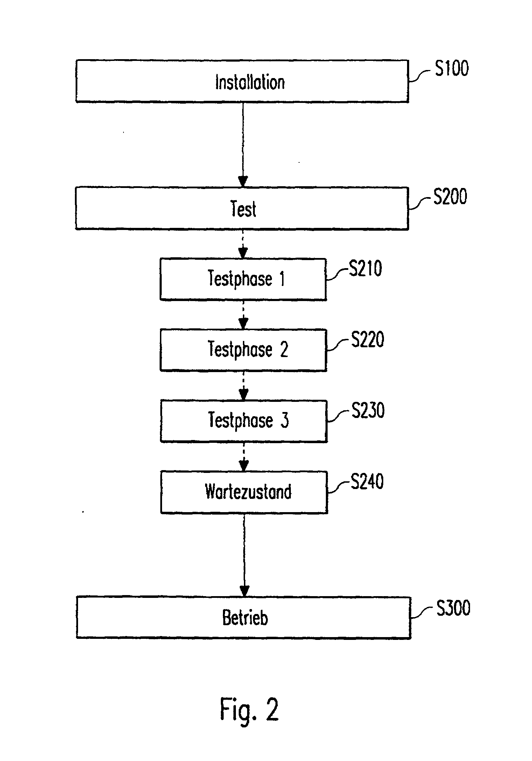

Das in Figur 1 gezeigte Übertragungssystem unterliegt sehr starken Einflüssen der Leitungsgegebenheiten, so daß gemäß der vorliegenden Erfindung in dem in Figur 1 gezeigten Bussystem ein Testmodus integriert ist. Bei dem in Figur 1 gezeigten Ausführungsbeispiel ist insbesondere das an den Verteiler bzw. Netzkoppler 1 angeschlossene Steuergerät 50 für die Durchführung dieses Testmodus verantwortlich. Stattdessen ist jedoch auch denkbar, daß die Testfunktion auch von einem der an die Zweigleitungen 3 oder 4 angeschlossenen Steuergeräte 40, 60 wahrgenommen wird. Ebenso wäre denkbar, daß der Verteiler 1 seinerseits eine selbständige Steuereinheit bildet, die sämtliche Steuer- und Testfunktionen ausführen kann. Die bei dem in Figur 1 gezeigten Bussystem integrierte Testfunktion ermöglicht eine einfache Kontrolle der Kommunikationsfunktionen der einzelnen Teilnetze des Bussystems. Die allgemeine Funktion dieses Testmodus soll nachfolgend näher anhand Figur 2 erläutert werden.

Figur 2 zeigt allgemein den Verfahrensablauf zur Inbetriebnahme des in Figur 1 gezeigten Bussystems. Grundsätzlich ist zunächst eine Installation des Bussystems durchzuführen (Schritt S100). Unter Installation wird allgemein die Montage und das Anschließen aller Komponenten des Bussystems, d. h. aller Steuergeräte, Verbraucher und Leitungen usw., verstanden. Mit Hilfe der Installation wird somit zunächst die in Figur 1 gezeigte schaltungstechnische Verdrahtung der einzelnen Komponenten des Bussystems realisiert. An die Installation des Bussystems schließt sich der erfindungsgemäß vorgeschlagene Funktionstest an (Schritt S200). Mit Hilfe des Funktionstests kann die ordnungsgemäße Funktion der einzelnen Komponenten des Bussystems sowie der Kommunikationswege zwischen den einzelnen Komponenten überprüft werden. Insbesondere kann der Testmodus mehrere Testphasen umfassen, wobei gemäß dem bevorzugten Ausführungsbeispiel insgesamt drei Testphasen 1-3 nacheinander durchlaufen werden (S210, S220, S230), die jeweils unterschiedliche Funktionsaspekte des Bussystems testen. Mit Hilfe der ersten Testphase kann geprüft werden, ob alle Verbraucher bzw. Aktoren des Bussystems von dem richtigen Teilnetz bzw. dem richtigen Stromkreis versorgt werden und ihre Sicherheitsfunktionen richtig reagieren und ansprechen. Mit Hilfe der zweiten Testphase kann beispielsweise geprüft werden, ob alle Verbraucher bzw. Aktoren des Bussystems die von einem Steuergerät übertragenen Nachrichten bzw. Steuerbefehle korrekt verstehen können, so daß einerseits die Sendefunktion des Steuergeräts und andererseits die Empfangsfunktion der Verbraucher getestet werden kann. Mit Hilfe der dritten Testphase kann schließlich die Übertragung in der Richtung von dem Verbraucher zu dem testenden Steuergerät 50, welches gemäß Figur 1 mit dem Verteiler bzw. Netzkoppler 1 gekoppelt ist, geprüft werden. Wurden alle Testphasen fehlerfrei durchlaufen, geht das System in einen Wartezustand über (S240), der beispielsweise nur durch Einschalten des in Figur 1 gezeigten Hauptschalters 6 des Bussystems (Power-On-Reset) oder durch erneutes Aufrufen der Testfunktion an dem Steuergerät 50 verlassen werden kann. Vorteilhafterweise werden die einzelnen Testphasen für jedes Teilnetz bzw. für jede Spannungsversorgungsleitung 2-4 einzeln nacheinander ausgeführt, so daß gemäß dem in Figur 1 dargestellten Ausführungsbeispiel die Testphasen S210-S230 insgesamt dreimal durchlaufen werden müssen, ehe in den eigentlichen Betrieb übergegangen wird (Schritt S300). Mit der eigentlichen Inbetriebnahme (S300) erfolgt auch die Konfiguration der einzelnen Steuergeräte 40, 50 und 60, d. h. das Programmieren von vorgegebenen Szenarien oder Tageslichtkennlinien, die unter den einzelnen Auswahltasten 45, 55 oder 65 der Steuergeräte 40, 50 abgespeichert und nachfolgend abgerufen werden können. Ebenso können den einzelnen Verbrauchern während des Betriebs Adressen zugeordnet werden, um die einzelnen Verbraucher raum- oder gruppenweise oder aber auch individuell ansprechen zu können.

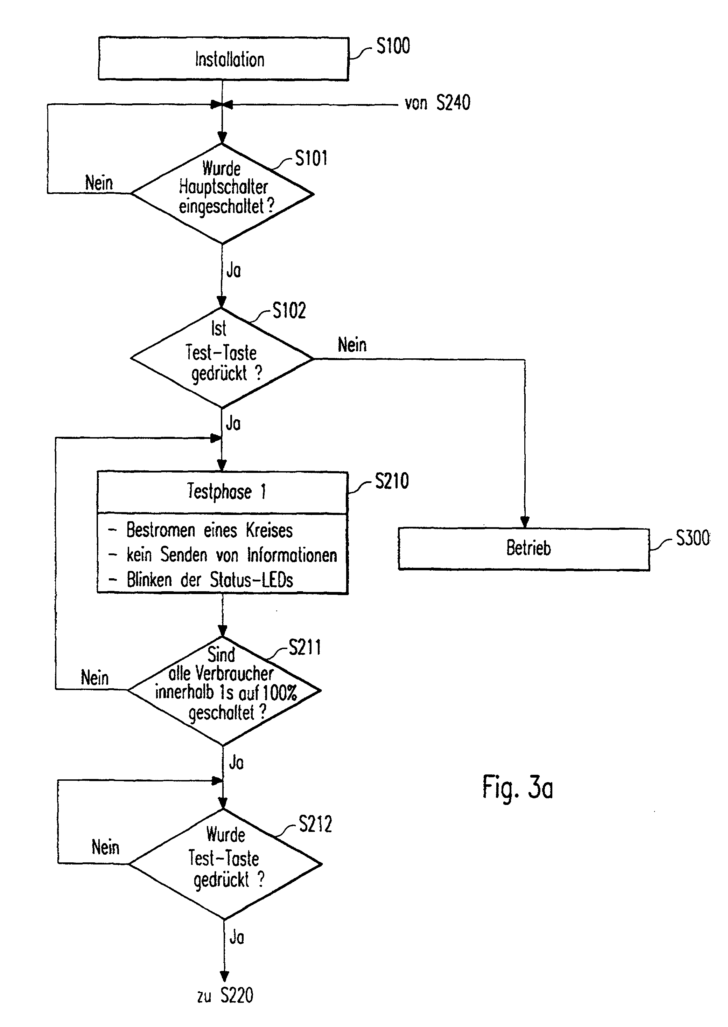

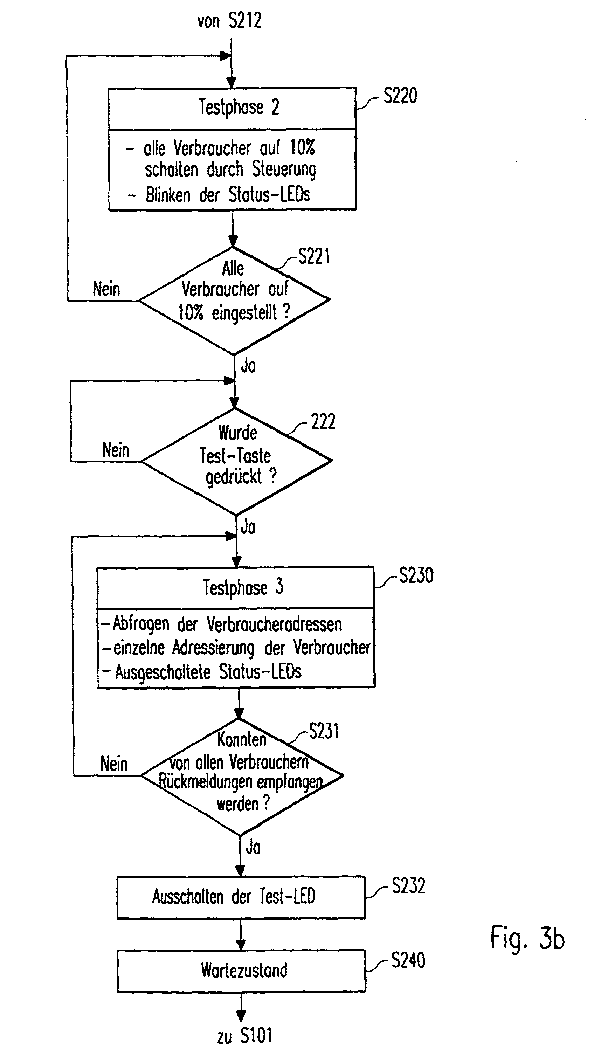

Das gemäß der vorliegenden Erfindung vorgeschlagene Testverfahren soll nachfolgend näher anhand des in Figur 3a und 3b gezeigten Flußdiagramms erläutert werden.

Wie bereits zuvor erläutert worden ist, wird jeder zur Informationsübertragung dienende Kreis, d. h. jede der in Figur 1 gezeigten Versorgungsspannungsleitungen 2-4, des Bussystems einzeln geprüft, so daß während des Test eines dieser Teilnetze alle anderen Teilnetze bzw. Kreise stromlos geschaltet sind. Zu diesem Zweck sind jedem Kreis Schalter bzw. Sicherungen 7-9 zugeordnet, die manuell oder aber auch von dem Steuer- bzw. Testgerät 50 automatisch geöffnet und geschlossen werden können. Wie in Figur 1 gezeigt ist, ist zunächst lediglich die Spannungsversorgungsleitung 2 an die zentrale Spannungsversorgungsleitung L, N angeschlossen, da lediglich der Schalter 7 geschlossen ist, während die Schalter 8 und 9 geöffnet sind, so daß die Spannungsversorgungsleitungen 3 und 4 von der zentralen Spannungsversorgungsleitung L, N getrennt sind. Es wird somit im folgenden davon ausgegangen, daß zunächst die Spannungsversorgungsleitung 2 mit ihrem entsprechenden Teilnetz getestet wird.

Der Testmodus wird dadurch angelaufen, daß eine zu prüfende Versorgungsspannungsleitung, d. h. im vorliegenden Fall die Spannungsversorgungsleitung 2, bestromt und gleichzeitig eine an dem mit dem Verteiler bzw. Netzkoppler 1 gekoppelten Steuergerät 50 vorgesehene Testtaste 56 gedrückt gehalten wird. Daher wird gemäß Figur 3a in einem ersten Schritt zunächst überprüft, ob der Hauptschalter 6 des in Figur 1 gezeigten Bussystems sowie mindestens einer der Schalter 7-9 eingeschaltet ist. Ist dies nicht der Fall, bleibt das Bussystem zunächst in einem Wartezustand. Wurde hingegen der Hauptschalter 6 eingeschaltet, wird anschließend geprüft, ob auch die in Figur 1 gezeigte Testtaste 56 gedrückt ist (Schritt 102). Ist dies nicht der Fall, bedeutet dies, daß der Testmodus nicht angelaufen werden soll, so daß in den normalen Betriebsmodus übergegangen werden kann (S300).

Wurde hingegen beim Einschalten der Stromversorgung zugleich die Testtaste 56 am Verteiler 1 bzw. an dem damit gekoppelten Steuergerät 50 gedrückt, wird die erste Testphase angelaufen (S210). In dieser ersten Testphase wird lediglich das zu testende Teilnetz bzw. die zu testende Spannungsversorgungsleitung 2 bestromt, ohne daß von dem als Testgerät dienenden Steuergerät 50 Informationen über diese Spannungsversorgungsleitung 2 übertragen werden. In der Regel sind in den einzelnen Verbrauchern bzw. Aktoren Sicherheitsfunktionen integriert, die im Falle einer Kommunikationsunterbrechung bzw. eines Ausfalls der Zentralsteuereinheit (d. h. bei Ausbleiben einer Informationsübertragung) zu einer bestimmten Aktion des jeweiligen Verbrauchers führen, so daß beispielsweise bei Auftreten einer Kommunikationsunterbrechung die Beleuchtungseinrichtung 10 auf maximale Helligkeit geschaltet oder die Jalousie 30 vollständig geöffnet wird. In der ersten Testphase ist der Verteiler 1 bzw. das damit gekoppelte Steuergerät 50 inaktiv, so daß keine Informationen über den Vorwärtskanal übertragen werden und gegenüber den Verbrauchern des zu testenden Kreises eine Kommunikationsunterbrechung bzw. ein Zentralenausfall simuliert wird. Zudem weist jeder der an das Bussystem angeschlossenen Sensoren bzw. Schnittstellen 70, 80 und 90 sowie jedes Steuergerät 40, 50 bzw. 60 und jeder gegebenenfalls angeschlossene Schalter oder Taster eine Status-Leuchtdiode (Status-LED) 73, 83 bzw. 93 und 46, 57 bzw. 66 auf, die während dieser ersten Testphase blinkend geschaltet werden, wobei insbesondere das Blinkmuster der zu testenden Sensoren in Übereinstimmung mit dem Blinkmuster der Leuchtdiode 57 am Test- bzw. Steuergerät 50 geschaltet wird. Während der ersten Testphase ist dieses Blinkmuster relativ schnell, so daß die Leuchtdioden beispielsweise jeweils im Abstand von 0,5s ein- bzw. ausgeschaltet werden.

Anschließend wird im Schritt S211 geprüft, ob die an der zu testenden Versorgungsspannungsleitung angeschlossenen Verbraucher korrekt auf die simulierte Kommunikationsunterbrechung angesprochen haben. In der Regel sind die in den einzelnen Verbrauchern integrierten Sicherheitsfunktionen derart, daß im Falle einer Kommunikationsunterbrechung, d. h. für den Fall, daß keine Informationen über die Spannungsversorgungsleitungen übertragen werden, die Ausgänge der einzelnen Verbraucher auf 100% Ausgangsleistung gestellt werden, so daß insbesondere beispielsweise die Beleuchtungseinrichtung 10 in diesem Fall auf maximale Helligkeit geschaltet wird. Im Schritt S211 wird somit überprüft, ob die an die zu testende Versorgungsspannungsleitung angeschlossenen Verbraucher innerhalb einer bestimmten Zeitspanne, insbesondere innerhalb von 1s, eine Ausgangsleistung von 100% erreicht haben. Da gemäß Figur 1 insbesondere die Versorgungsspannungsleitung 2 geprüft wird, wird somit im Schritt S211 getestet, ob die Beleuchtungseinrichtung 10 innerhalb von 1s auf maximale Helligkeit und die Klimaanlage 20 auf maximale Ausgangsleistung geschaltet worden sind. Zudem kann im Schritt S211 überprüft werden, ob die Status-LEDs der entsprechenden Sensoren, Taster, Steuergeräte usw. tatsächlich in Übereinstimmung mit der Status-LED 57 blinken. Konnte im Schritt S211 kein Fehler erkannt werden, ist die erste Testphase abgeschlossen. Wurde hingegen im Schritt S211 ein Fehler erkannt, muß versucht werden, diesen zu beheben, und die erste Testphase mit den Schritten S210 und S211 wird erneut durchlaufen.

Insgesamt kann somit mit der ersten Testphase verifiziert werden, ob alle Verbraucher bzw. Aktoren des Bussystems von dem richtigen Teilnetz bzw. der richtigen Versorgungsspannungsleitung versorgt werden und die Sicherheitsfunktionen der einzelnen Verbraucher korrekt reagieren.

Durch erneutes Drücken der Testtaste 56 an dem Steuer- bzw. Testgerät 50 des Verteilers 1 kann die zweite Testphase angelaufen werden (Schritt S212).

In der zweiten Testphase (Schritt S220) werden von dem Steuer- bzw. Testgerät 50 alle an die zu testende Versorgungsspannungsleitung angeschlossenen Verbraucher mit Hilfe entsprechender Steuerinformationen bzw. einer entsprechenden Broadcast-Nachricht gemeinsam auf einen bestimmten Ausgangsleistungswert, z. B. auf 10% Ausgangsleistung, eingestellt. Während der zweiten Testphase werden somit die Verbraucher nicht einzeln adressiert, sondern durch einen gemeinsamen Steuerbefehl zusammen angesteuert. Des weiteren werden wieder die Status-LEDs der entsprechenden Sensoren, Taster oder Steuergeräte in Übereinstimmung mit dem Blinkmuster der Status-LED 57 des Test- bzw. Steuergeräts 50 blinkend geschaltet, wobei in der zweiten Testphase das Blinkmuster gegenüber der ersten Testphase langsamer ist, so daß die Leuchtdioden beispielsweise jeweils in Abschnitten von 1s ein- bzw. ausgeschaltet werden.

Im Schritt S221 wird nachfolgend überprüft, ob tatsächlich die an die zu testende Spannungsversorgungsleitung angeschlossenen Verbraucher auf den gewünschten Ausgangsleistungswert eingestellt worden sind. Ebenso kann überprüft werden, ob tatsächlich die Zustands-LEDs der entsprechenden Sensoren, Steuergeräte oder Taster blinkend geschaltet worden sind. Im vorliegenden Fall wird insbesondere im Schritt S221 überprüft, ob die an die Spannungsversorgungsleitung 2 angeschlossene Beleuchtungseinrichtung 10 auf einen einer Ausgangsleistung von 10% entsprechenden Helligkeitswert gedimmt und die Klimaanlage 20 auf eine Temperaturleistung von 10% eingestellt worden ist. Ebenso wird überprüft, ob die an den Lichtsensor 70 vorgesehene Status-LED 73 in Übereinstimmung mit dem Blinkmuster der Status-LED 57 des Steuergeräts 50 blinkt. Wurde während des Schritts S221 kein Fehler erkannt, ist die zweite Testphase abgeschlossen. Trat hingegen während der zweiten Testphase ein Fehler auf, ist nach Behebung des Fehlers wieder mit der zweiten Testphase von vorne zu beginnen.

Nach erfolgreichem Durchlaufen der zweiten Testphase steht somit fest, ob alle Verbraucher der zu testenden Versorgungsspannungsleitung die von dem Steuergerät 50 gesendeten Informationen bzw. Nachrichten korrekt verstehen können, so daß mit Hilfe der zweiten Testphase geprüft werden kann, ob die einzelnen Teilnehmer des Bussystems über den Vorwärtskanal des Bussystems übertragene Informationen mit einer gewissen Qualität empfangen können. Insgesamt wird somit während der zweiten Testphase einerseits die Sendefunktion des Steuergeräts 50 bzw. des Verteilers 1 und andererseits die Empfangsfunktion der einzelnen Teilnehmer getestet.

Ergänzend kann während der zweiten Testphase vorgesehen sein, daß das Steuergerät 50 bzw. der Verteiler 1 zudem nach an die jeweils zu testende Spannungsversorgungsleitung angeschlossenen Verbrauchern sucht.

Durch eine weitere Betätigung der an dem Steuergerät 50 angebrachten Testtaste 56 kann in die dritte Testphase übergegangen werden (Schritt S222).

Während dieser dritten Testphase sucht das Steuer- bzw. Testgerät 50 oder der Verteiler 1 nach an die zu testende Spannungsversorgungsleitung bzw. das zu testende Teilnetz angeschlossenen Verbrauchern und fordert die angeschlossenen Verbraucher auf, die ihnen zugewiesenen Adressen über das Bussystem zu übertragen, so daß diese Adressen von dem Steuergerät 50 oder dem Verteiler 1 gespeichert werden können. Anschließend ist das Steuergerät 50 in der Lage die einzelnen Verbraucher durch Senden eines entsprechenden Steuerbefehls nacheinander individuell zu adressieren und einzustellen. Insbesondere kann vorgesehen sein, daß nach Abfragen der Verbraucheradressen die einzelnen Verbraucher individuell nacheinander durch entsprechende Adressierung von 10% Ausgangsleistung auf 0% Ausgangsleistung gefahren werden, so daß anschließend für den Benutzer, der die Anlage in Betrieb nimmt, anhand der Zustandsänderungen der einzelnen Verbraucher sichtbar ist, ob die Kommunikation über das Bussystem in beide Richtungen, d. h. sowohl über den Vorwärts- als auch über den Rückwärtskanal, funktioniert. Während der dritten Testphase werden zudem die Status-LEDs an den jeweiligen Sensoren, Steuergeräten und Tastern analog zu der Status-LED 57 des Steuergeräts 50 dauerhaft ein- oder ausgeschaltet, um die dritte Testphase zu signalisieren.

Während der dritten Testphase (Schritt S230) können die Verbraucher der zu testenden Spannungsversorgungsleitung auch von gegebenenfalls an die jeweilige Spannungsversorgungsleitung angeschlossenen Tasten oder Steuergeräten verstellt werden.

Während eines Schritts S231 wird anschließend überprüft, ob die infolge einer Verstellung oder Adressierung der Verbraucher der zu testenden Spannungsversorgungsleitung abgesendeten Rückmeldungen von dem Verteiler 1 bzw. dem damit gekoppelten Steuergerät 50 mit ausreichender Qualität empfangen werden konnten. Optional kann an dem Steuergerät 50 ein Anzeigemittel vorgesehen sein, welches anzeigt, ob die Signalqualität aller empfangenen Rückmeldungen/Telegramme der einzelnen Verbraucher ausreicht oder nicht. Insbesondere kommt zu diesem Zweck die an dem Steuergerät bereits vorgesehene Anzeige 53 in Betracht.

Wurde jedoch im Schritt S231 erkannt, daß nicht sämtliche Rückmeldungen korrekt empfangen werden konnten, ist die dritte Testphase nach Behebung des Fehlers erneut zu durchlaufen.

Allgemein wird somit mit Hilfe der dritten Testphase die Übertragung von Rückmeldungen von den Verbrauchern zu dem Verteiler 1 sowie die Empfangsfähigkeit des Verteilers 1 bzw. des Steuergeräts 50 getestet.

Wurde auch in der dritten Testphase kein Fehler erkannt, wird endgültig die Status-LED 57 am Steuergerät 50 dauerhaft ausgeschaltet, wodurch der Abschluß des Testmodus signalisiert wird. Das Bussystem ist jedoch noch nicht für den Normalbetrieb bereit, sondern geht zunächst in einen Wartezustand S240 über, in dem das Bussystem bzw. der Verteiler 1 solange verharrt, bis erneut die Testtaste 56 am Steuergerät 50 betätigt oder ein Power-On-Reset-Befehl, d. h. eine erneute Betätigung des Hauptschalters 6 des Bussystems, erkannt worden ist. Der in Figur 3b dargestellte Wartezustand (S240) ist somit gleichbedeutend mit einer Überprüfung der Schritte S101 und S102 (vgl. Figur 3a). Bei Wiedereinschalten des Stroms ohne Drücken der Testtaste 56 am Steuergerät 50 geht das Bussystem bzw. der Verteiler 1 in den normalen Betriebsmodus über (S300).

Bei dem in Figur 3a und 3b dargestellten Flußdiagramm wird davon ausgegangen, daß bei Auftreten eines Fehlers lediglich die entsprechende Testphase wiederholt werden muß. Statt dessen ist es jedoch auch möglich, daß bei Auftreten und Erkennen eines Fehlers der gesamte Test, beginnend mit der ersten Testphase, wiederholt wird.

## Patentansprüche

1. Verfahren zum Inbetriebnehmen eines Bussystems,
wobei das Bussystem mindestens eine Spannungsversorgungsleitung (2-4) umfaßt, über die einerseits eine Versorgungsspannung an daran anschließbare Verbraucher (10, 20, 30) angelegt wird und andererseits Informationen übertragen werden, umfassend die Schritte:
a) Installieren des Bussystems,
b) Testen der Funktionsfähigkeit des Bussystems, und
c) Betreiben des Bussystems,
wobei der Schritt b) mehrere nacheinander ausgeführte Testphasen umfaßt, die unterschiedliche Aspekte der Funktionsfähigkeit des Bussystems testen, und
wobei während einer ersten Testphase der Anschluß von Verbrauchern (10, 20, 30), Sensoren (70, 80) und/oder Steuereinrichtungen (40, 60) an die jeweils richtige Spannungsversorgungsleitung (2-4) getestet wird.

2. Verfahren nach Anspruch 1,
**dadurch gekennzeichnet,**
**daß** das Bussystem mehrere Spannungsversorgungsleitungen (2-4) umfaßt, die jeweils selektiv an eine zentrale Spannungsversorgungsleitung (L, N) angeschlossen werden können und über die einerseits an jeweils daran anschließbare Verbraucher (10, 20, 30) eine Versorgungsspannung angelegt und andererseits Informationen übertragen werden, wobei während des Schritts b) jede Spannungsversorgungsleitung (2-4) einzeln getestet wird, während die jeweils anderen Spannungsversorgungsleitungen von der zentralen Spannungsversorgungsleitung (L, N) getrennt sind.

3. Verfahren nach Anspruch 2,
**dadurch gekennzeichnet,**
**daß** die einzelnen Testphasen für jede Spannungsversorgungsleitung (2-4) separat nacheinander ausgeführt werden, während die jeweils anderen Spannungsversorgungsleitungen von der zentralen Spannungsversorgungsleitung (L, N) getrennt sind.

4. Verfahren nach einem der Ansprüche 1-3,
**dadurch gekennzeichnet,**
**daß** während der ersten Testphase zudem das korrekte Ansprechen einer in den angeschlossenen Verbrauchern (10, 20, 30), Sensoren (70, 80) und/oder Steuereinrichtungen (40, 60) implementierten Sicherheitsfunktion getestet wird, die im Falle einer Unterbrechung der Informationsübertragung über die entsprechende Spannungsversorgungsleitung (2-4) ansprechen sollte.

5. Verfahren nach einem der vorherigen Ansprüche,
**dadurch gekennzeichnet,**
**daß** während der ersten Testphase an die zu testende Spannungsversorgungsleitung (2-4) lediglich eine Versorgungsspannung angelegt wird, ohne daß eine Informationsübertragung über die Spannungsversorgungsleitung (2-4) stattfindet, und
**daß** anschließend überprüft wird, ob die an die Spannungsversorgungsleitung (2-4) angeschlossenen Verbraucher (10, 20, 30) innerhalb einer bestimmten Zeitspanne eine bestimmte Ausgangsleistung eingestellt haben.

6. Verfahren nach Anspruch 4 und 5,
**dadurch gekennzeichnet,**
**daß** die bestimmte Zeitspanne eine Sekunde beträgt und die bestimmte Ausgangsleistung der bei Ansprechen der Sicherheitsfunktion vorgesehenen Ausgangsleistung entspricht.

7. Verfahren nach Anspruch 5 oder 6,
**dadurch gekennzeichnet,**
**daß** während der ersten Testphase nach Anlegen der Versorgungsspannung an die entsprechende Spannungsversorgungsleitung (2-4) ohne Stattfinden einer Informationsübertragung der Anschluß von Sensoren (70, 80) und/oder Steuergeräten (40, 60) an die entsprechende Spannungsversorgungsleitung (2-4) durch Überprüfen einer durch die angelegte Versorgungsspannung hervorgerufenen Aktivierung von Anzeigemitteln (73, 83, 46, 66) der Sensoren und/oder Steuergeräte getestet wird,

8. Verfahren nach einem der vorherigen Ansprüche,
**dadurch gekennzeichnet,**
**daß** während einer zweiten Testphase die Übertragungsfähigkeit des Bussystems zum Übertragen der Informationen getestet wird.

9. Verfahren nach Anspruch 8,
**dadurch gekennzeichnet,**
**daß** während der zweiten Testphase getestet wird, ob die an der entsprechenden Spannungsversorgungsleitung angeschlossenen Verbraucher (10, 20, 30), Sensoren (70, 80) und/oder Steuergeräte (40, 60) die über die Spannungsversorgungsleitung (2-4) übertragenen Informationen korrekt empfangen.

10. Verfahren nach Anspruch 9,
**dadurch gekennzeichnet,**
**daß** während der zweiten Testphase bestimmte Steuerinformationen an die angeschlossenen Verbraucher (10, 20, 30) übertragen werden, und
**daß** anschließend überprüft wird, ob die jeweiligen Verbraucher (10, 20, 30) korrekt auf die über die entsprechende Spannungsversorgungsleitung (2-4) übertragenen Steuerinformationen reagiert haben.

11. Verfahren nach Anspruch 10,
**dadurch gekennzeichnet,**
**daß** die während der zweiten Testphase übertragenen Steuerinformationen einer 10%-Ausgangsleistung der an die entsprechende Spannungsversorgungsleitung (2-4) angeschlossenen Verbraucher (10, 20, 30) entsprechen.

12. Verfahren nach einem der vorherigen Ansprüche,
**dadurch gekennzeichnet,**
**daß** während einer dritten Testphase die Übertragungsfähigkeit des Bussystems zum Übertragen von Rückmeldungen der an die entsprechende Spannungsversorgungsleitung (2-4) angeschlossenen Verbraucher (10, 20, 30), Sensoren (70, 80) und/oder Steuergeräte (40, 60) getestet wird.

13. Verfahren nach Anspruch 12,
**dadurch gekennzeichnet,**
**daß** jeder Verbraucher (10, 20, 30) durch eine verbraucherspezifische Adresse ansteuerbar ist, und
**daß** während der dritten Testphase die einzelnen Verbraucher nach Abfragen ihrer Adressen einzeln über die jeweilige verbraucherspezifische Adresse angesteuert werden, um sie durch Übertragen entsprechender Steuerinformationen über die entsprechende Spannungsversorgungsleitung (2-4) auf eine Ausgangsleistung von 0% einzustellen und entsprechende Rückmeldungen der angesteuerten Verbraucher auszuwerten.

14. Verfahren nach Anspruch 12 oder 13,
**dadurch gekennzeichnet,**
**daß** während der dritten Testphase die an die entsprechende Spannungsversorgungsleitung angeschlossenen Verbraucher (10, 20, 30) über an dieselbe Spannungsversorgungsleitung (2-4) angeschlossene Steuergeräte (40, 60) verstellt werden, und
**daß** anschließend überprüft wird, ob mit den Spannungsversorgungsleitungen (2-4) gekoppelte Steuermittel (50) die von den entsprechenden Verbrauchern (10, 20, 30) nach ihrer Verstellung abgesetzten Rückmeldungen korrekt empfangen können.

15. Verfahren nach Anspruch 14,
**dadurch gekennzeichnet,**
**daß** während der dritten Testphase die Qualität der von den Steuermitteln (50) empfangenen Rückmeldungen erfaßt und an Anzeigemitteln (53) dargestellt wird.

16. Verfahren nach einem der Ansprüche 8-11 und einem der Ansprüche 12-15,
**dadurch gekennzeichnet,**
**daß** während der zweiten und dritten Testphase automatisch mit Hilfe von mit der zu testenden Spannungsversorgungsleitung (2-4) gekoppelten Steuermitteln (50) nach an die entsprechende Spannungsversorgungsleitung (2-4) angeschlossenen Verbrauchern (10, 20, 30) gesucht wird.

17. Verfahren nach einem der vorherigen Ansprüche,
**dadurch gekennzeichnet,**
**daß** die jeweils augenblicklich durchlaufene Testphase über Anzeigemittel (57) angezeigt wird.

18. Verfahren nach einem der vorherigen Ansprüche,
**dadurch gekennzeichnet,**
**daß** jede Testphase des Schritts b) von einem Benutzer durch Betätigung eines entsprechenden Test-Aktivierungsmittels (56) eingeleitet wird.

19. Verfahren nach einem der vorherigen Ansprüche,
**dadurch gekennzeichnet,**
**daß** bei Erkennen eines Fehlers in einer der Testphasen die entsprechende Testphase wiederholt wird.

20. Verfahren nach einem der vorhergehenden Ansprüche,
**dadurch gekennzeichnet,**
**daß** das Bussystem nach Ausführung des Schritts b) in einen Wartezustand übergeführt wird bis durch den Benutzer erneut der Schritt c) oder der Schritt b) eingeleitet wird.

21. Verfahren nach einem der vorhergehenden Ansprüche,
**dadurch gekennzeichnet,**
**daß** nach dem Schritt a) automatisch der Schritt b) eingeleitet wird, wenn eine zentrale Versorgungsspannung an das Bussystem angelegt und gleichzeitig Test-Aktivierungsmittel (56) des Bussystems aktiviert werden, und
**daß** nach dem Schritt a) automatisch der Schritt c) eingeleitet wird, wenn die zentrale Versorgungsspannung ohne gleichzeitige Aktivierung der Test-Aktivierungsmittel (56) angelegt wird.

## Claims

1. Method for commissioning a bus system, wherein the bus system comprises at least one voltage supply line (2-4) by way of which, on the one hand, a supply voltage is applied to loads (10, 20, 30) that can be connected thereto and, on the other hand, information is transmitted, comprising the steps:
a) installation of the bus system, and
b) testing whether the bus system is functioning properly, and
c) operation of the bus system,
wherein step b) comprises a plurality of test phases which are carried out in succession and which test different aspects of the bus system's ability to function properly, and
wherein during a first test phase the connection of loads (10, 20, 30), sensors (70, 80) and/or control devices (40, 60) to the correct respective voltage supply line (2-4) is tested.

2. Method according to claim 1,
**characterised in that** the bus system comprises a plurality of voltage supply lines (2-4) which can each be selectively connected to a central voltage supply line (L, N) and by way of which, on the one hand, a supply voltage is applied to respective loads (10, 20, 30) which can be connected thereto and, on the other hand, information is transmitted, in which case during step b) each voltage supply line (2-4) is tested individually, whilst the other respective voltage supply lines are isolated from the central voltage supply line (L, N).

3. Method according to claim 2,
**characterised in that** the individual test phases for each voltage supply line (2-4) are carried out separately in succession, whilst the other respective voltage supply lines are isolated from the central voltage supply line (L, N).

4. Method according to one of claims 1-3,
**characterised in that** during the first test phase, moreover, the correct response of a safety function that is implemented in the connected loads (10, 20, 30), sensors (70, 80) and/or control devices (40, 60) and which should respond in the case of an interruption in the transmission of information by way of the corresponding voltage supply line (2-4) is tested.

5. Method according to one of the previous claims,
**characterised in that** during the first test phase merely a supply voltage is applied to the voltage supply line (2-4) that is to be tested without any information being transmitted by way of the voltage supply line (2-4), and **in that** subsequently it is examined whether the loads (10, 20, 30) connected to the voltage supply line (2-4) have set a specific power output within a specific time span.

6. Method according to claim 4 and 5,
**characterised in that** the specific time span amounts to one second and the specific power output corresponds to the power output that is intended when the safety function responds.

7. Method according to claim 5 or 6,
**characterised in that** during the first test phase after the supply voltage has been applied to the corresponding voltage supply line (2-4) without any transmission of information taking place, the connection of sensors (70, 80) and/or control units (40, 60) to the corresponding voltage supply line (2-4) is tested by examining any activation of display means (73, 83, 46, 66) of the sensors and/or control units that is brought about by the supply voltage that is applied.

8. Method according to one of the previous claims,
**characterised in that** during a second test phase the transmission capacity of the bus system for transmitting the information is tested.

9. Method according to claim 8,
**characterised in that** during the second test phase a test is carried out to check whether the loads (10, 20, 30), sensors (70, 80) and/or control units (40, 60) that are connected to the corresponding voltage supply line are correctly receiving the information that is transmitted by way of the voltage supply line (2-4).

10. Method according to claim 9,
**characterised in that** during the second test phase specific control information is transmitted to the loads (10, 20, 30) that are connected, and **in that** subsequently it is examined whether the respective loads (10, 20, 30) have reacted correctly to the control information that is transmitted by way of the corresponding voltage supply line (2-4).

11. Method according to claim 10,
**characterised in that** the control information that is transmitted during the second test phase corresponds to a 10% power output of the loads (10, 20, 30) that are connected to the corresponding voltage supply line (2-4).

12. Method according to one of the previous claims,
**characterised in that** during a third test phase the transmission capacity of the bus system for transmitting check-back signals of the loads (10, 20, 30), sensors (70, 80) and/or control units (40, 60) connected to the corresponding voltage supply line (2-4) is tested.

13. Method according to claim 12,
**characterised in that** each load (10, 20, 30) can be activated by means of a load-specific address, and **in that** during the third test phase the individual loads are individually activated, after their addresses have been scanned, by way of the respective load-specific address in order that, by means of transmission of corresponding control information by way of the corresponding voltage supply line (2-4), they may be set to a power output of 0% and in order that corresponding check-back signals of the activated loads may be evaluated.

14. Method according to claim 12 or 13,
**characterised in that** during the third test phase the loads (10, 20, 30) that are connected to the corresponding voltage supply line are adjusted by way of control units (40, 60) connected to the same voltage supply line (2-4), and **in that** subsequently it is examined whether control means (50) coupled to the voltage supply lines (2-4) can correctly receive the check-back signals transmitted by the corresponding loads (10, 20, 30) after the latter have been adjusted.

15. Method according to claim 14,
**characterised in that** during the third test phase the quality of the check-back signals received by the control means (50) is measured and shown on display means (53).

16. Method according to one of claims 8-11 and one of claims 12-15,
**characterised in that** during the second and third test phases a search is automatically carried out for loads (10, 20, 30) that are connected to the corresponding voltage supply line (2-4), with the search being carried out with the aid of control means (50) coupled to the voltage supply line (2-4) that is to be tested.

17. Method according to one of the previous claims,
**characterised in that** the respective test phase that is currently running is displayed by way of display means (57).

18. Method according to one of the previous claims,
**characterised in that** each test phase of step b) is initiated by a user by actuation of a corresponding test-activation means (56).

19. Method according to one of the previous claims,
**characterised in that** when an error is identified in one of the test phases the corresponding test phase is repeated.

20. Method according to one of the preceding claims,
**characterised in that** the bus system is transferred into a waiting state after step b) has been carried out until step b) again or step c) is initiated by the user.

21. Method according to one of the preceding claims,
**characterised in that** after step a) step b) is automatically initiated when a central supply voltage is applied to the bus system and test-activation means (56) of the bus system are simultaneously activated, and **in that** after step a) step c) is automatically initiated when the central supply voltage is applied without simultaneous activation of the test-activation means (56).

## Revendications

1. Procédé permettant de mettre en service un système de bus,
moyennant quoi le système de bus comprend au moins une ligne d'alimentation (2-4) qui permet, d'une part, d'appliquer une tension d'alimentation aux récepteurs raccordables (10, 20, 30) et de transmettre, d'autre part, des informations.
Ce procédé comporte les opérations suivantes :
a) Installation du système de bus
b)Test de la capacité de fonctionnement du système de bus et
c) Actionnement du système de bus,
l'opération b) comprend plusieurs phases d'essai successives destinées à tester différents aspects de la capacité de fonctionnement du système de bus et
le raccordement de récepteurs (10, 20, 30), de capteurs (70, 80) et/ou de dispositifs de commande (40, 60) à la ligne d'alimentation correspondante (2-4) est testé pendant une première phase d'essai.

2. Procédé conformément à la revendication 1
**caractérisé par le fait**
**que** le système de bus comprend plusieurs lignes d'alimentation (2-4) qui peuvent être raccordées de façon sélective à une ligne d'alimentation centrale (L, N), laquelle permet d'appliquer, d'une part, une tension d'alimentation aux récepteurs raccordables (10, 20, 30) et de transmettre, d'autre part, les informations, chaque ligne d'alimentation (2-4) étant testée individuellement pendant l'opération b), alors que les autres lignes d'alimentation sont séparées de la ligne d'alimentation centrale (L, N).

3. Procédé conformément à la revendication 2,
**caractérisé par le fait**
**que** les différentes phases d'essai sont réalisées successivement et séparément pour chaque ligne d'alimentation (2-4), alors que les autres lignes d'alimentation sont séparées de la ligne d'alimentation centrale (L, N).

4. Procédé conformément à l'une des revendications 1-3,
**caractérisé par le fait**
**que** la capacité de réaction d'une fonction de sécurité mise en oeuvre dans les récepteurs (10, 20, 30), les capteurs (70, 80) et/ou les dispositifs de commande (40, 60) raccordés et devant réagir en cas d'interruption de la transmission des informations par la ligne d'alimentation correspondante (2-4) est testée pendant la première phase d'essai.

5. Procédé conformément à l'une des revendications précédentes,
**caractérisé par le fait**
**qu'**une tension est appliquée pendant la première phase d'essai sur la ligne d'alimentation (2-4) qui doit être testée sans transmission des informations par la ligne d'alimentation (2-4) et
**qu'**un contrôle est ensuite effectué, permettant de déterminer si les récepteurs (10, 20, 30) raccordés à la ligne d'alimentation (2-4) ont réglé une puissance de sortie définie pendant une durée déterminée.

6. Procédé conformément à la revendication 4 et 5,
**caractérisé par le fait**
**que** la durée déterminée est d'une seconde et que la puissance de sortie définie correspond à la puissance de sortie prévue en cas de réaction de la fonction de sécurité.

7. Procédé conformément à la revendication 5 ou 6,
**caractérisé par le fait**
**que** le raccordement des capteurs (70, 80) et/ou des appareils de commande (40, 60) à la ligne d'alimentation correspondante (2-4) est testé en contrôlant une activation des éléments d'affichage (73, 83, 46, 66) des capteurs et/ou des appareils de commande, engendrée par la tension d'alimentation appliquée pendant la première phase d'essai, une fois que la tension d'alimentation est appliquée sur la ligne d'alimentation correspondante (2-4) sans qu'une transmission des informations ne soit réalisée.

8. Procédé conformément à l'une des revendications précédentes,
**caractérisé par le fait**
**que** la capacité du système de bus à transmettre les informations est testée pendant une deuxième phase d'essai.

9. Procédé conformément à la revendication 8,
**caractérisé par le fait**
**qu'**un contrôle est effectué au cours de la deuxième phase d'essai, permettant de déterminer si les récepteurs (10, 20, 30), les capteurs (70, 80) et/ou les appareils de commande (40, 60) raccordés à la ligne d'alimentation correspondante reçoivent bien les informations transmises par la ligne d'alimentation (2-4).

10. Procédé conformément à la revendication 9,
**caractérisé par le fait**
**que** certaines informations de commande sont transmises aux récepteurs raccordés (10, 20, 30) pendant la deuxième phase d'essai et qu'un contrôle est ensuite effectué, permettant de déterminer si les récepteurs correspondants (10, 20, 30) ont bien réagi aux informations de commande transmises par la ligne d'alimentation correspondante (2-4).

11. Procédé conformément à la revendication 10,
**caractérisé par le fait**
**que** les informations de commande transmises pendant la deuxième phase d'essai correspondent à une puissance de sortie de 10% des récepteurs (10, 20, 30) raccordés à la ligne d'alimentation correspondante (2-4).

12. Procédé conformément à l'une des revendications précédentes;
**caractérisé par le fait**
**que** la capacité du système de bus à transmettre les informations des accusés de réception aux récepteurs (10, 20, 30), aux capteurs (70, 80,) et/ou aux appareils de commande (40, 60) raccordés à la ligne d'alimentation correspondante (2-4) est testée pendant une troisième phase d'essai.

13. Procédé conformément à la revendication 12,
**caractérisé par le fait**
**que** chaque récepteur (10, 20, 30) peut être activé par une adresse qui lui est spécifique et
**que** les différents récepteurs sont activés individuellement par les adresses correspondantes qui leur sont spécifiques pendant la troisième phase d'essai afin de les régler sur une puissance de sortie de 0% en transmettant les informations de commande respectives par la ligne d'alimentation correspondante (2-4) et d'évaluer les accusés de réception correspondants des récepteurs activés.

14. Procédé conformément à la revendication 12 ou 13,
**caractérisé par le fait**
**que** les récepteurs (10, 20, 30) raccordés à la ligne d'alimentation correspondante sont réglés par les appareils de commande (40, 60) raccordés à la même ligne d'alimentation (2-4) pendant la troisième phase d'essai et
**qu'**un contrôle est ensuite effectué, permettant de déterminer si les accusés de réception émis par les récepteurs correspondants (10, 20, 30) après leur réglage peuvent être reçus correctement à l'aide des éléments de commande (50) reliés aux lignes d'alimentation (2-4).

15. Procédé conformément à la revendication 14,
**caractérisé par le fait**
**que** la qualité des accusés de réception reçus par les éléments de commande (50) est enregistrée et présentée sur les éléments d'affichage (53) pendant la troisième phase d'essai.

16. Procédé conformément à l'une des revendications 8-11 et l'une des revendications 12-15,
**caractérisé par le fait**
**que** les récepteurs (10, 20, 30) raccordés à la ligne d'alimentation correspondante (2-4) sont automatiquement recherchés à l'aide des éléments de commande (50) reliés à la ligne d'alimentation (2-4) qui doit être testée pendant la deuxième et troisième phase d'essai.

17. Procédé conformément à l'une des revendications précédentes,
**caractérisé par le fait**
**que** la phase d'essai en cours est affichée par l'élément d'affichage (57).

18. Procédé conformément à l'une des revendications précédentes,
**caractérisé par le fait**
**que** chaque phase d'essai de l'opération b) est mise en oeuvre par un utilisateur en actionnant un élément d'activation d'essai correspondant (56).

19. Procédé conformément à l'une des revendications précédentes,
**caractérisé par le fait**
**que** la phase d'essai correspondante est répétée si une erreur est identifiée lors de l'une des phases d'essai.

20. Procédé conformément à l'une des revendications précédentes,
**caractérisé par le fait que**
le système de bus est transmis dans un état d'attente après avoir procédé à l'opération b) jusqu'à ce que l'opération b) ou c) soit de nouveau mise en oeuvre par l'utilisateur.

21. Procédé conformément à l'une des revendications précédentes,
**caractérisé par le fait**
**que** l'opération b) est automatiquement introduite après l'opération a) lorsqu'une tension d'alimentation centrale est appliquée sur le système du bus et que les éléments d'activation d'essai (56) du système du bus sont activés simultanément et
**que** l'opération c) est automatiquement introduite après l'opération a) lorsque la tension d'alimentation centrale est appliquée sans activation simultanée des éléments d'activation d'essai (56).
